# EUROPÄISCHE PATENTSCHRIFT

(11) **EP 0 309 872 B1**
(45) Veröffentlichungstag und Bekanntmachung des Hinweises auf die Patenterteilung: **06.12.1995**
(21) Anmeldenummer: 88115423.1
(22) Anmeldetag: 21.09.1988
(51) Int. Cl.: C05F 15/00, C05F 7/00

(54) **Verfahren zum Kompostieren von Müll**
Process for composting urban waste
Procédé de compostage de déchets urbains

(30) Priorität: 26.09.1987 DE 3732564
(43) Veröffentlichungstag der Anmeldung: 05.04.1989
(73) Patentinhaber: NOELL Service und Maschinentechnik GmbH, D-30853 Langenhagen (DE)
(72) Erfinder: Kurney, Werner, Ing. grad., D-4400 Münster (DE)

(56) Entgegenhaltungen:
- EP-A- 0 181 615
- DE-A- 2 744 026
- AUFBEREITUNGS-TECHNIK, Nr. 4, April 1968, Seiten 171-173; M. LAKOMY: "Müllkompostierung in einer rotierenden Trommel nach vorheriger Müllzerkleinerung (RK-Verfahren)"
- Müll und Abfall 7/84, Seiten 191-197

## Beschreibung

Die Erfindung betrifft ein Verfahren zum Kompostieren von Müll unter Zumischung von Klärschlamm, und Beimischung von bereits Kompostiertem gut, bei dem der Müll einer Zerkleinerung und Aussortierung nicht kompostierbarer Teile und anschließend einer zweistufigen Rotte unterworfen wird.

Derartige Verfahren sind beispielsweise aus der AT-PS 341 551, der AT-OS 3199/82 und insbesondere aus der DE-A-27 44 026 bekannt.

Diese bekannten Verfahren, die neben der Verwertung des Mülls auch die Verwertung des fast stets neben dem Müll anfallenden Klärschlamms dienen, lassen sich bei der Verarbeitung von sehr feuchten, nativ-organischen Abfällen nicht anwenden. Darunter versteht man die in der Bioabfalltonne getrennt gesammelten organischen Abfälle aus Haus und Garten, den sogenannten Biomüll, und die bei getrennten Sammlungen in einem Kommunalkreis anfallenden Grünabfälle, wie Laub, Gras, Hecken- und Baumschnitt, Friedhofsabfälle etc. Derartiger Biomüll und Grünabfall wird, wie der Aufsatz der Anmelderin in der Zeitschrift UMWELTMAGAZIN Heft 2, März 1987, mit dem Titel "Grün- und Bioabfall-Kompostierung" zeigt, in neuerer Zeit auch zur Herstellung von als Bodenverbesserungsmittel brauchbarem Kompost verwendet.

Wollte man, wie dies aus der o. g. Patentliteratur bekannt ist, den Klärschlamm solchem Müll bereits vor der ersten Rottestufe beigeben, so müßte man nach Wegen suchen, die Feuchtigkeit des Gemisches auf für die Rotte optimale Werte einzustellen. Der Feuchtigkeitsgehalt kann herabgesetzt werden durch Zumischung von bereits kompostiertem Gut, das infolge der biologischen Vorgänge eine niedrige Feuchte aufweist, wie das aus der US-PS 3 963 470 hinsichtlich des organische Stoffe enthaltenden Abfalls und aus der DE-OS 36 46 303 hinsichtlich der Trocknung von Wasserpflanzenmasse bekannt ist. Bei der Kompostierung von sehr feuchtem Biomüll und Grünabfall unter Verarbeitung von in entsprechender Menge anfallendem Klärschlamm müßte man aber eine sehr große Menge Rottegut als Rückgut zugeben, was zu sehr großen Rotteeinrichtungen führen würde, bei Mietenkompostierung beispielsweise zu einer nicht vertretbar großen Rottefläche, insbesondere bei Inbetrachtziehung der Kosten für die erforderlichen Belüftungseinrichtungen. Außerdem sind die Kosten für die hohe zusätzliche Gutbewegung nicht unerheblich.

Aufgabe der Erfindung ist es, ein Verfahren anzugeben, das diese, die Investitions- und Betriebskosten unzuträglich erhöhenden Nachteile vermeidet, wobei auch eine Anlage zur Durchführung des Verfahrens vorgeschlagen werden soll, die im Aufbau einfach ist und die weitgehend ausschließt, daß bei Mitverarbeitung von Klärschlamm unzulässig hohe Geruchswerte auftreten.

Zur Lösung dieser Aufgabe wird erfindungsgemäß vorgeschlagen, daß zum Kompostieren von sehr feuchtem Müll, wie Biomüll (aus Haushaltungen) und Grünabfall (Gras, Laub, Hecken-, Baumschnitt und Friedhofsabfälle), dieser Müll in der ersten Rottestufe unter Beimischung von kompostiertem Gut aus der ersten und/oder zweiten Rottestufe (in der Feuchtigkeit vermindertem Rückgut) vorkompostiert und danach in der zweiten Rottestufe unter Beimischung von Klärschlamm fertig kompostiert wird.

Gegenstand der Erfindung ist somit ein Verfahren zum Kompostieren von Müll unter Zumischung von Klärschlemm und Beimischung von bereits kompostiertem Gut bei dem der Müll einer Zerkleinerung und Aussortierung nicht kompostierbarer Teile unterworfen und anschließend einer zweistufigen Rotte unterworfen wird, das dadurch gekennzeichne, daß Biomüll und/oder Grünabfall, dessen Feuchtigkeitsgehalt so hoch ist, daß es keinen Feuchtigkeitszuschlag verträgt, ohne aus dem für die Rotte optimalen Feuchtigkeitsbereich herauszufallen, in der ersten Rottestufe unter Beimischung von kompostiertem, in der Feuchtigkeit vermindertem Rückgut aus der ersten und/oder der zweiten Rottestufe vorkompostiert und danach in der zweiten Rottestufe unter Beimischung von Klärschlamm fertig kompostiert wird.

Auf diese Weise entsteht in der ersten Rottestufe unter Verwendung einer nicht zu großen Rückgutmenge ein verhältnismäßig trockener Frischkompost, der imstande ist, zur Erzielung der in der zweiten Rottestufe notwendigen Feuchte die gleichzeitig anfallende Menge an Klärschlamm aufzunehmen.

Zur Durchführung des vorstehend beschriebenen Verfahrens werden vorteilhafterweise einige Maßnahmen angewendet, die bei Rotteverfahren an sich bekannt sind.

So ist es günstig, wenn der Müll im Anschluß an das Zerkleinern und Aussortieren nicht kompostierbarer Teile zusammen mit dem Rückgut einem Mischvorgang unterworfen wird. Dabei kann es vorteilhaft sein, wenn der Müll gleichzeitig mit dem Mischvorgang einer ersten Vorkompostierung unterworfen wird. Ist die hier zum Einsatz kommende Mischtrommel für eine entsprechende Verweilzeit ausgelegt, kann durch gleichzeitig stattfindende Mischung und Vorkompostierung eine gute Homogenisierung des Rottegutes erreicht werden.

Auch der zweiten Rottestufe wird vorteilhafterweise ein Mischvorgang vorgeschaltet, in dem das aus der ersten Rottestufe kommende Rottegut mit dem Klärschlamm innig vermischt wird. Das aus der zweiten Rottestufe kommende Rottegut (der Fertigkompost) wird durch Siebung vorzugsweise in mehrere Korngrößen unterteilt, Von diesen werden das gröbste Gut (z. B. > 40 mm Korngröße) dem unbearbeiteten Müll vor dessen Zerkleinerung und Teile des Gutes mittlerer Korngröße als Rückgut nach der Zerkleinerung und Aussortierung nicht kompostierbarer Teile zugemischt, während der Rest als Fertigkompost dem Verbrauch zugeführt wird. Befinden sich im Kreise der Verbraucher Weinbauern, so ist es vorteilhaft, für sie eine Größenklasse von 25-40 mm abzusieben.

Komponenten des Grünabfalls, wie Gras oder Laub, bedürfen im allgemeinen keiner Reinigung oder Zerkleinerung. Sie können daher dem der ersten Rottestufe vorgeschalteten Mischvorgang unmittelbar zugeführt werden.

Die Zeichnung veranschaulicht die Erfindung mit dem Fließschema einer Kompostieranlage. Darin ist mit 1 eine Zerkleinerungsmaschine, mit 2 eine Siebvorrichtung, mit 3 ein Magnetabscheider, mit 4 eine erste Mischtrommel, mit 5 eine erste Rotteeinrichtung, z. B. eine belüftete Tafelmiete, mit 6 eine zweite Mischtrommel, mit 7 eine zweite Rotteeinrichtung, z. B. eine ebenfalls belüftete Tafelmiete,und mit 8 ein weiteres Sieb bezeichnet.

Der Biomüll wird zusammen mit Grünabfall und gegebenenfalls mit grobkörnigem Fertigkompost der Zerkleinerungsmaschine 1 zugeführt. Das zerkleinerte Material gelangt auf das Sieb 2, dessen Überlauf aus groben, nicht kompostierbaren Teilen besteht, die einer Deponie zugeführt werden. Der Siebdurchlauf gelangt zu dem Magnetabscheider 3, der noch kleinere Eisenteile ausscheidet.

Das so von allen nicht kompostierbaren Teilen befreite Gut gelangt in die erste Mischtrommel 4, gegebenenfalls zusammen mit Abfallgut, wie Gras und Laub, das nicht zerkleinert oder gereinigt zu werden braucht. Außerdem wird der Mischtrommel 4 Rottegut mit einer Feuchte von etwa 30 % als Rückgut in solchem Maße aufgegeben, daß das in der Mischtrommel 4 entstehende Gemisch eine Feuchte von etwa 50 % hat, wie sie für einen guten Verlauf der in der nachfolgenden ersten Rottestufe 5 stattfindenden Rotte vorteilhaft ist. Das Rückgut kann der ersten oder der zweiten Rottestufe oder auch beiden Rottestufen entnommen werden. Die Mischtrommel 4 kann größenmäßig auch so ausgeführt sein, daß in ihr schon eine gewisse Vorkompostierung auftritt.

Die erste Hauptrotte kann ebenfalls in einer Drehtrommel oder in einer belüfteten Tafelmiete durchgeführt werden. Bevor das aus der ersten Rottestufe 5 austretende Rottegut der zweiten Rottestufe 7 zugeführt wird, wird ihm Klärschlamm zugegeben, der eine Feuchte von etwa 90 % aufweist, und zwar in einem solchen Maße, daß das in der zweiten Mischtrommel 6 entstehende Gemisch eine Feuchte von etwa 50 % hat, die für den Verlauf der Rotte in der zweiten Rottestufe 7 am günstigsten ist, die beispielsweise durch eine ebenfalls belüftete Tafelmiete verkörpert wird.

Der beim Abbau der Tafelmiete anfallende Fertigkompost kann in dem mehrstufigen Sieb 9 in mehrere Korngrößenklassen aufgeteilt werden, von denen die gröbste,z. B. eine Teilegröße von über 40 mm aufweisende Klasse, zwecks weiterer Zerkleinerung zusammen mit dem Rohmüll der Zerkleinerungsmaschine 1 aufgegeben wird. Sie verhindert außerdem ein Verschmieren der Zerkleinerungsmaschine. Das feinste Rottegut wird vorzugsweise im Gartenbau verwertet, während die mittleren Gutklassen, soweit sie nicht als Rückgut in die Mischtrommel 4 gelangen, im Acker- und Weinbau nutzbringend verwertet werden.

## Patentansprüche

1. Verfahren zum Kompostieren von Müll unter Zumischung von Klärschlamm und Beimischung von bereits kompostiertem Gut bei dem der Müll einer Zerkleinerung und Aussortierung nicht kompostierbarer Teile unterworfen und anschließend einer zweistufigen Rotte unterworfen wird, dadurch gekennzeichnet, daß Biomüll und/oder Grünabfall, dessen Feuchtigkeitsgehalt so hoch ist, daß es keinen Feuchtigkeitszuschlag verträgt, ohne aus dem für die Rotte optimalen Feuchtigkeitsbereich herauszufallen, in der ersten Rottestufe unter Beimischung von kompostiertem, in der Feuchtigkeit vermindertem Rückgut aus der ersten und/oder der zweiten Rottestufe vorkompostiert und danach in der zweiten Rottestufe unter Beimischung von Klärschlamm fertig kompostiert wird.

2. Verfahren nach Anspruch 1, dadurch gekennzeichnet, daß der Müll im Anschluß an das Zerkleinern und Aussortieren nicht kompostierbarer Teile zusammen mit dem Rückgut einem Mischvorgang unterworfen wird.

3. Verfahren nach Anspruch 2, dadurch gekennzeichnet, daß der Müll gleichzeitig mit dem Mischvorgang einer Vorkompostierung unterworfen wird.

4. Verfahren nach Anspruch 1, dadurch gekennzeichnet, daß der zweiten Rottestufe ein Mischvorgang für das aus der ersten Rottestufe kommende Rottegut und den Klärschlamm vorgeschaltet ist.

5. Verfahren nach Anspruch 1 und 2, dadurch gekennzeichnet, daß das aus der zweiten Rottestufe kommende Rottegut (Fertigkompost) durch Siebung in mehrere Korngrößen unterteilt wird, von denen das gröbste Gut (z. B.>40 mm) dem unbearbeiteten Müll vor dem Zerkleinern und das Gut mittlerer Größe als Rückgut dem Müll nach dem Zerkleinern und Aussortieren nicht kompostierbarer Teile zugemischt wird, während der Rest als Fertigkompost dem Verbrauch zugeführt wird.

6. Verfahren nach Anspruch 5, dadurch gekennzeichnet, daß von dem aus der zweiten Rottestufe kommenden Rottegut (Fertigkompost) eine Korngröße von etwa 25 bis 40 mm gesondert abgesiebt wird.

7. Verfahren nach Anspruch 2, dadurch gekennzeichnet, daß Komponenten des Grünabfalls, wie Gras oder Laub, dem Mischvorgang unmittelbar zugeführt werden.

## Claims

1. A method of composting waste, incorporating the addition of sewage sludge plus material that has already been composted, in which the waste is subjected to size reduction as well as separation of non-compostible inclusions, followed by a two-stage fermentation process, characterised in that biological and/or "green" waste with a moisture content so high that it cannot accept any additional moisture without exceeding the optimum moisture content parameters for the fermentation process, is pre-composted in the first fermentation stage with the addition of already composted, moisture-reduced material from the first and/or second fermentation stage, after which it is then mixed with sewage sludge and composted to maturity in the second fermentation stage.

2. A method according to claim 1, characterised in that, following the shredding process and non-compostible material separation, the waste together with the re-circulated composted material is subjected to a mixing process.

3. A method according to claim 2, characterised in that the waste is subjected to a pre-composting process simultaneously with the mixing process.

4. A method according to claim 1, characterised in that a process for mixing the fermented material from the first fermentation stage with the sewage sludge is arranged upstream of the second fermentation stage.

5. A method according to claims 1 and 2, characterised in that the material from the second fermentation stage (mature compost) is split by screening into a number of different granulations, from which the coarsest fraction (e.g. plus 40 mm) is mixed with the untreated waste before the shredding process, and the medium-sized fraction as return material is added to the waste after the shredding and non-compostible material separation processes, with the remainder being onwardly conveyed for disposition as mature compost.

6. A method according to claim 5, characterised in that the fermented material (mature compost) from the second fermentation stage) is screened off at approx. 25 - 40 mm.

7. A method according to claim 2, characterised in that components of the "green" waste, such as grass or leaves, are added directly to the mixing process.

## Revendications

1. Procédé pour le compostage de déchets avec mélange de boues de curage et adjonction de matière déjà compostée, où les déchets sont soumis à un broyage, à une séparation des parties non compostables et ensuite à une fermentation à deux étages, caractérisé en ce que des déchets biodégradables et/ou des déchets verts, dont la teneur d'humidité est si haute qu'elle ne supporte pas de supplément d'humidité sans tomber du domaine optimal d'humidité pour la fermentation, sont préliminairement compostés dans le premier étage de fermentation avec l'adjonction de matière de retour compostée à humidité réduite du premier et/ou du second étage de fermentation et puis ils sont définitivement compostés avec l'adjonction de boues de curage dans le second étage de fermentation.

2. Procédé selon la revendication 1, caractérisé en ce que, comme suite au broyage et à la séparation des parties non compostables, les déchets sont soumis à une opération de mélange avec la matière de retour.

3. Procédé selon la revendication 2, caractérisé en ce que les déchets sont soumis à un compostage préliminaire qui a lieu en mème temps que l'opération de mélange.

4. Procédé selon la revendication 1, caractérisé en ce qu'une opération de mélange pour la matière fermentée provenant du premier étage de fermentation et les boues de curage est faite en amont du second étage de fermentation.

5. Procédé selon les revendications 1 et 2, caractérisé en ce que la matière fermentée provenant du second étage de fermentation (compost fini) est subdivisée par criblage en plusieurs tranches granulométriques, dont la matière la plus grossière (par ex. > 40 mm) est mélangée avec les déchets non traités avant broyage et la matière de grosseur moyenne, comme matière de retour, avec les déchets après broyage et séparation des parties non compostables, tandis que le reste est amené à son utilisation comme compost fini.

6. Procédé selon la revendication 5, caractérisé en ce qu'une tranche granulométrique d'environ 25 à 40 mm est séparée par criblage de la matière fermentée (compost fini) provenant du second étage de fermentation.

7. Procédé selon la revendication 2, caractérisé en ce que des composants des déchets verts, comme herbes et feuilles, sont amenés directement à l'opération de mélange.
